# EUROPEAN PATENT APPLICATION

(11) **EP 4 775 931 A1**
(43) Date of publication of application: **15.07.2026**
(21) Application number: 26150165.4
(22) Date of filing: 05.01.2026
(51) Int. Cl.: G01C 21/36, B60L 58/12, B60L 3/12

(54) **INFORMATION PROCESSING APPARATUS AND PROGRAM**

(30) Priority: 14.01.2025 JP 2025005067
(71) Applicant: Toyota Jidosha Kabushiki Kaisha, Toyota-shi, Aichi-ken 471-8571 (JP)
(72) Inventor: TAKAHASHI, Makoto, Toyota-shi, 471-8571 (JP)
(74) Representative: TBK

(57) **Abstract**

An information processing apparatus (1) according to an aspect of the present disclosure acquires a current position (25) of a vehicle (MV), acquires a current value (30) of a remaining energy level in the vehicle (MV), determines a visual attribute value (35) of a vehicle position mark (5) according to the acquired current value(30) of the remaining energy level, and renders the vehicle position mark (5) at the acquired current position (25) on a map (45) with the determined attribute value (35).

## Description

### BACKGROUND

### Technical Field

The present disclosure relates to an information processing apparatus and a program.

### Description of the Related Art

Japanese Patent Laid-Open No. 2014-217108 proposes a display apparatus that displays a remaining battery level of an electric vehicle. The display apparatus manages an amount of stored power charged in a battery when the electric vehicle starts as main energy and an amount of stored power charged in the battery by power generation based on an operation of a regenerative brake after the electric vehicle starts as regenerative energy. In addition, the display apparatus displays the remaining battery level separately as a first remaining battery level due to main energy and a second remaining battery level due to regenerative energy.

### SUMMARY

An object of the present disclosure is to provide a technique for ergonomically reducing a burden of checking a remaining energy level together with a map.

An information processing apparatus according to a first mode of the present disclosure includes a controller. The controller is configured to execute: acquiring a current position of a vehicle; acquiring a current value of a remaining energy level in the vehicle; determining a visual attribute value of a vehicle position mark according to the acquired current value of the remaining energy level; and rendering the vehicle position mark at the acquired current position on a map with the determined attribute value.

A program according to a second mode of the present disclosure is a program for causing a computer to execute an information processing method. The information processing method includes: acquiring a current position of a vehicle; acquiring a current value of a remaining energy level in the vehicle; determining a visual attribute value of a vehicle position mark according to the acquired current value of the remaining energy level; and rendering the vehicle position mark at the acquired current position on a map with the determined attribute value.

According to the present disclosure, a reduction in a burden of checking a remaining energy level together with a map can be expected.

### BRIEF DESCRIPTION OF THE DRAWINGS

Fig. 1 schematically illustrates an example of a situation where the present disclosure is applied;
Fig. 2 schematically illustrates an example of an attribute value;
Fig. 3 schematically illustrates an example of a method of determining an attribute value when a destination is set;
Fig. 4 schematically illustrates an example of an energy source of a vehicle;
Fig. 5 schematically illustrates an example of a hardware configuration of an information processing apparatus;
Fig. 6 schematically illustrates an example of a software configuration of the information processing apparatus; and
Fig. 7 is a flow chart illustrating an example of a processing procedure related to rendering of a vehicle position mark according to the present disclosure.

### DESCRIPTION OF THE EMBODIMENTS

The present inventors found the following problem with conventional methods of displaying a remaining battery level. That is, when using a vehicle, map display may also be used with a navigation apparatus or the like. In this case, in conventional methods, a map including a vehicle position and a remaining battery level are separately displayed. For example, a message indicating that the remaining battery level is low is displayed superimposed on the map. Alternatively, for example, a mark indicating the remaining battery level is displayed in a region that differs from the map. In these displays, since the map and the remaining battery level are displayed separately, users may have been burdened by checking the remaining battery level while checking the map.

Note that such a problem is not limited to cases of electric vehicles. The problem described above can occur when separately displaying a remaining energy level and a map even in vehicles that use other forms of energy such as gasoline, hydrogen, and alcohol.

On the other hand, the information processing apparatus according to the first mode of the present disclosure includes a controller. The controller is configured to execute: acquiring a current position of a vehicle; acquiring a current value of a remaining energy level in the vehicle; determining a visual attribute value of a vehicle position mark according to the acquired current value of the remaining energy level; and rendering the vehicle position mark at the acquired current position on a map with the determined attribute value.

In the first mode of the present disclosure, the attribute value of the vehicle position mark is determined according to the current value of the remaining energy level. Therefore, the remaining energy level can be conveyed by the display of the vehicle position mark on the map. In other words, the remaining energy level can be checked while looking at the map. Accordingly, since the map and the remaining energy level can be checked by looking at a same position (a position where the vehicle position mark is displayed), a burden of looking at separate positions can be reduced. Therefore, according to the first mode of the present disclosure, an ergonomic reduction in a burden of checking a remaining energy level together with a map can be expected.

Note that the form of the present disclosure need not be limited to the information processing apparatus described above. As another form of the information processing apparatus according to the mode described above, an aspect of the present disclosure may be any of an information processing method that realizes all of or a part of each component described above, a program, or a storage medium readable by a machine such as a computer that stores such a program. In this case, the storage medium readable by a machine may be a non-transitory medium that accumulates information such as programs by an electrical action, a magnetic action, an optical action, a mechanical action, or a chemical action. The non-transitory storage medium may include a storage medium (CD, DVD, semiconductor memory, or the like), an auxiliary storage apparatus of a computer, or an external main memory connected to a computer.

For example, a program according to a second mode of the present disclosure may be a program for causing a computer to execute an information processing method. The information processing method may include: acquiring a current position of a vehicle; acquiring a current value of a remaining energy level in the vehicle; determining a visual attribute value of a vehicle position mark according to the acquired current value of the remaining energy level; and rendering the vehicle position mark at the acquired current position on a map with the determined attribute value.

In addition, for example, an information processing method according to a third mode of the present disclosure may be executed by a computer. The information processing method may include: acquiring a current position of a vehicle; acquiring a current value of a remaining energy level in the vehicle; determining a visual attribute value of a vehicle position mark according to the acquired current value of the remaining energy level; and rendering the vehicle position mark at the acquired current position on a map with the determined attribute value.

Hereinafter, an embodiment according to an aspect of the present disclosure will be described based on the drawings. However, note that the present embodiment described below is in all respects merely illustrative of the present disclosure. Various improvements or modifications may be made without departing from the scope of the present disclosure. In implementing the present disclosure, specific configurations in accordance with embodiments may be adopted as appropriate. Although the data appearing in the present embodiment is described by natural language, more specifically, the data is designated by pseudo-language, commands, parameters, machine language, electrical signals, and the like which can be recognized by computers and other machines.

### [1 Example of application]

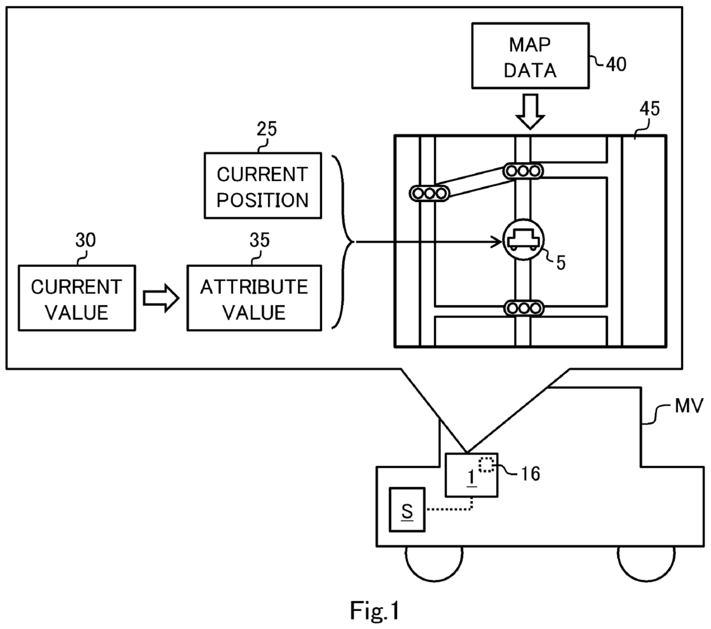

Fig. 1 schematically illustrates an example of a situation to which the present disclosure is applied. An information processing apparatus 1 according to the present embodiment is one or more computers configured to render a vehicle position mark 5 on a map 45.

The information processing apparatus 1 according to the present embodiment acquires a current position 25 of a vehicle MV. The information processing apparatus 1 acquires a current value 30 of a remaining energy level in the vehicle MV. The information processing apparatus 1 determines a visual attribute value 35 of the vehicle position mark 5 according to the acquired current value 30 of the remaining energy level. The information processing apparatus 1 renders the vehicle position mark 5 at the acquired current position 25 on the map 45 with the determined attribute value 35.

As described above, in the present embodiment, the attribute value 35 of the vehicle position mark 5 is determined according to the current value 30 of the remaining energy level. Therefore, the remaining energy level can be conveyed by the display of the vehicle position mark 5 on the map 45. In other words, the remaining energy level can be checked while looking at the map 45. Accordingly, since the map 45 and the remaining energy level of the vehicle MV can be checked by looking at a same position (a position where the vehicle position mark 5 is displayed), a burden of looking at separate positions can be reduced. Therefore, according to the present embodiment, an ergonomic reduction in a burden of checking the remaining energy level together with the map 45 can be expected.

### [Information processing apparatus]

The information processing apparatus 1 may be any computer capable of rendering the map 45 and the vehicle position mark 5. In one example, the information processing apparatus 1 may be any computer (in-vehicle apparatus) deployed in the vehicle MV at least on a temporary basis. For example, the information processing apparatus 1 may be an in-vehicle device that is mounted to the vehicle MV or a terminal device (such as a user terminal) that is temporarily deployed in the vehicle MV when the user uses the vehicle MV. In one example, the information processing apparatus 1 may be a computer that constitutes at least a part of the vehicle MV. In another example, the vehicle MV may include a computer separate from the information processing apparatus 1 and the information processing apparatus 1 may be used by being connected to the computer.

In one example, the information processing apparatus 1 may be configured to be capable of acquiring a current position (current position 25) as measured by a positioning module 16. The positioning module 16 may be arranged at any location where a position of the vehicle MV can be measured. In one example, the information processing apparatus 1 may have the positioning module 16 provided inside (in other words, built in). In another example, the positioning module 16 may be arranged outside of the information processing apparatus 1 (for example, vehicle MV). The information processing apparatus 1 may be directly or indirectly connected to the positioning module 16 deployed outside. Being indirectly connected may be constituted of being connected via a network (such as an in-vehicle network), another computer, or the like.

Note that the current position 25 may be the position as measured by the positioning module 16 as it is, a position obtained by correcting a measurement result of the positioning module 16 in any way, or a position predicted from the measurement result of the positioning module 16. In one example, the positioning module 16 may indirectly measure the current position of the vehicle MV by being mounted to the information processing apparatus 1 that is deployed in the vehicle MV. In another example, the positioning module 16 may directly measure a current position of the vehicle MV by being mounted to the vehicle MV.

### [Map]

The map 45 (map data 40) can be given as appropriate. The map data 40 may be configured as appropriate to illustrate the map 45. A known configuration may be adopted as a configuration of the map data 40. In one example, the map data 40 may be configured to include coordinate information of latitude and longitude, road network information, facility information, and the like. Road network information may include an ID of each road (road link). The map data 40 may be held in any storage area. The map data 40 may be stored in at least either a memory resource of the information processing apparatus 1 or an external main memory (including a memory resource of an external computer).

In the information processing apparatus 1, the map data 40 may be used for any purpose such as displaying a designated area or a designated location or route guidance. In one example, the information processing apparatus 1 need not hold the map data 40 in advance. In this case, the map data 40 may be held in an external main memory. The information processing apparatus 1 may be directly connected to the external main memory or indirectly connected to the external main memory via a network or the like. The information processing apparatus 1 may acquire at least data of a range to be used in the map data 40 from the external main memory by any method. A known method may be adopted as the method of acquiring the map data 40.

### [Attribute value]

An attribute (attribute value 35) to be controlled of the vehicle position mark 5 need not be particularly limited as long as the attribute value 35 is related to a visual display of the vehicle position mark 5 and may be selected as appropriate in accordance with the embodiment. For example, the visual display may include a color, a size, an icon, a lighting pattern, or the like. In addition, a correspondence relationship between the attribute value 35 and the current value 30 need not be particularly limited and may be defined as appropriate in accordance with the embodiment. The attribute value 35 of the vehicle position mark 5 may be continuously or discretely determined according to the current value 30 of the remaining energy level (including a remaining energy value 300 to be described later).

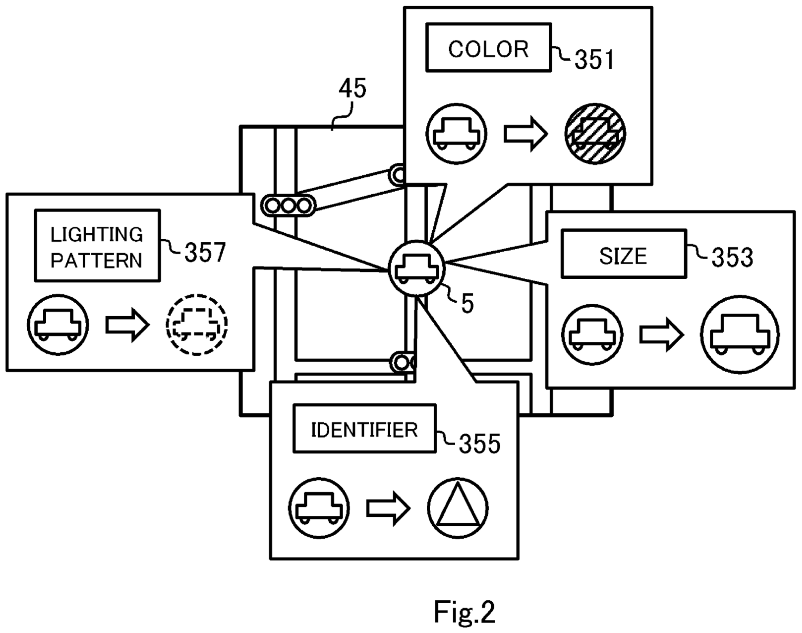

Fig. 2 schematically illustrates an example of the attribute value 35 according to the present embodiment. In one example, the visual attribute value 35 of the vehicle position mark 5 may include at least any of a value of a color 351 of the vehicle position mark 5, a value of a size 353 of the vehicle position mark 5, an identifier 355 of an icon used in the vehicle position mark 5, and a value of a lighting pattern 357 of the vehicle position mark 5. A correspondence relationship between each attribute value 35 (each of the value of the color 351, the value of the size 353, the identifier 355, and the value of the lighting pattern 357) and the current value 30 (including the remaining energy value 300 to be described later) need not be particularly limited and may be determined as appropriate in accordance with the embodiment. According to an example of the present embodiment, the remaining energy level can be suitably presented by controlling at least any of the color 351, the size 353, the icon (the identifier 355), and the lighting pattern 357 in the vehicle position mark 5.

Note that the value of the color 351 may specify a color of at least a part of the vehicle position mark 5. The attribute value 35 may specify the color of a plurality of locations of the vehicle position mark 5 by including a plurality of values of the color 351. The value of the color 351 may be optionally determined according to the current value 30. For example, the higher the remaining energy level indicated by the current value 30, the easier a value such as blue and green is selected as the attribute value 35 (value of the color 351). The lower the remaining energy level indicated by the current value 30, the easier a value such as yellow and red is selected as the attribute value 35 (value of the color 351). The value of the color 351 is preferably selected so that the remaining energy level (current value 30) is intuitively indicated by the specified color.

The value of the size 353 may specify a size of at least a part of the vehicle position mark 5. The attribute value 35 may specify the size of a plurality of locations of the vehicle position mark 5 by including a plurality of values of the size 353. The value of the size 353 may be optionally determined according to the current value 30. For example, the attribute value 35 (value of the size 353) may be designated such that the higher the remaining energy level indicated by the current value 30, the larger the size. The attribute value 35 (value of the size 353) may be designated such that the lower the remaining energy level indicated by the current value 30, the smaller the size. The value of the size 353 is preferably designated so that the remaining energy level (current value 30) is intuitively indicated by the specified size.

The identifier 355 of an icon may specify an icon of at least a part of the vehicle position mark 5. The attribute value 35 may include a plurality of identifiers 355 of icons. Accordingly, the vehicle position mark 5 may be constituted of a plurality of icons. The identifier 355 of the icon may be optionally determined according to the current value 30. For example, the higher the remaining energy level indicated by the current value 30, the easier an identifier with a vigorous-looking design (such as a laughing face) is designated as the attribute value 35 (the identifier 355 of an icon). The lower the remaining energy level indicated by the current value 30, the easier an identifier with a downcast-looking design (such as a sad face) is designated as the attribute value 35 (the identifier 355 of an icon). The identifier 355 of the icon is preferably designated so that the remaining energy level (current value 30) is intuitively indicated by the design of the specified icon.

The value of the lighting pattern 357 may specify a lighting state of at least a part of the vehicle position mark 5. The attribute value 35 may specify a blinking state of a plurality of locations of the vehicle position mark 5 by including a plurality of values (or sets of values) of the lighting pattern 357. The lighting pattern 357 may be defined as appropriate in accordance with the embodiment. For example, the lighting pattern 357 may include a definition of whether to perform lighting or blinking, a period of blinking, an interval between blinks, or the like. Lighting may be constantly displaying the vehicle position mark 5. Blinking may be repeatedly turning on (display) and turning off (extinction) the vehicle position mark 5. When blinking involves a plurality of blinks in one pattern, each interval between blinks (lighting time and extinction time) may be the same or may at least partially differ.

The value of the lighting pattern 357 may be optionally determined according to the current value 30. For example, the higher the remaining energy level indicated by the current value 30, the easier a value indicating lighting is designated as the attribute value 35 (value of the lighting pattern 357). The lower the remaining energy level indicated by the current value 30, the easier a value indicating blinking is designated as the attribute value 35 (value of the lighting pattern 357). A plurality of blinking patterns may be prepared, and by changing the attribute value 35 (value of the lighting pattern 357) according to the current value 30, the plurality of blinking patterns may be used in stages. The value of the lighting pattern 357 is preferably designated so that the remaining energy level (current value 30) is intuitively indicated by the specified blinking state.

### [Method of determining attribute value]

In one example, as the attribute value 35, the current value 30 may be determined using the current value 30 as it is. In other words, the attribute value 35 may be directly determined from the current value 30. In another example, the current value 30 may be applied to any arithmetic processing. The attribute value 35 may be determined from a value obtained as a result of the arithmetic processing. In other words, the attribute value 35 may be indirectly determined from the current value 30. Determining the attribute value 35 according to the current value 30 may include determining the attribute value 35 directly or indirectly from the current value 30.

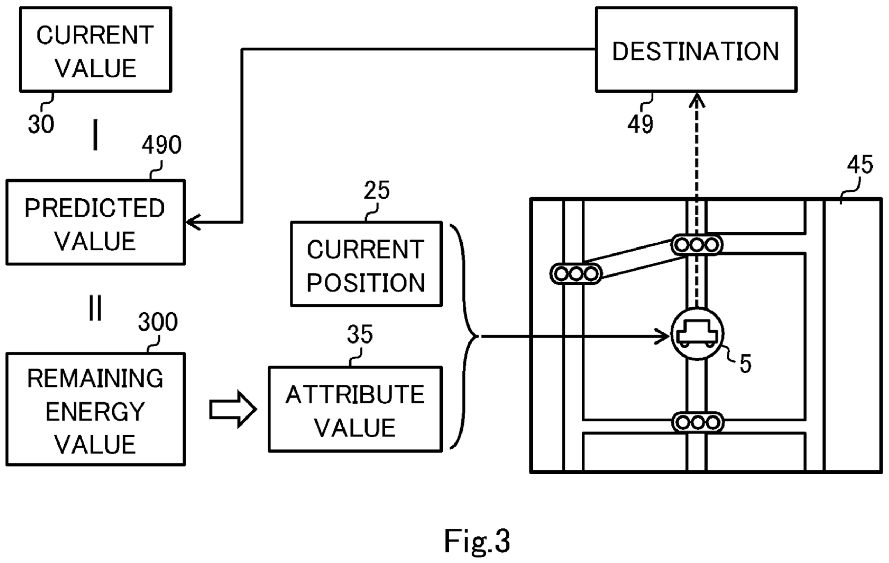

Fig. 3 schematically illustrates an example of a method of determining the attribute value 35 when a destination 49 is set in the present embodiment.

In one example, when the destination 49 is set on the map 45, the information processing apparatus 1 may acquire a predicted value 490 of an amount of energy consumption for a movement of the vehicle MV from the current position 25 to the destination 49. Note that the predicted value 490 may be calculated by any method. A known method may be adopted for the calculation of the predicted value 490. For example, the predicted value 490 may be calculated based on attributes (distance, type of road, number of traffic lights, and the like) of a route from the current position 25 to the destination 49. The route from the current position 25 to the destination 49 may be retrieved using a known method.

Any arithmetic model may be used to calculate the predicted value 490. The arithmetic model may be configured as appropriate so as to calculate the predicted value 490 from the attributes of the route. A type of the arithmetic model may be selected arbitrarily. For example, the arithmetic model may be constituted of at least either a rule-based model or a trained machine learning model generated by machine learning.

The rule-based model is configured to derive an inference result (predicted value 490) from a given input according to a rule. The rule may be set as appropriate. The machine learning model is configured to have one or more arithmetic parameters that can be adjusted by machine learning. The one or more arithmetic parameters are used to calculate a desired inference (derivation of the predicted value 490). For example, the machine learning model may be constituted of a neural network, a regression model, a decision tree model, a support vector machine, or another function expression or the like. A method of machine learning can be selected as appropriate according to a model of machine learning to be adopted (for example, error back propagation). In the machine learning, a value of each arithmetic parameter of the machine learning model may be adjusted (optimized) as appropriate using a training sample so that the predicted value 490 can be suitably calculated.

In addition, the calculation of the predicted value 490 may be executed on the information processing apparatus 1 or may be executed by an external computer. When adopting the latter form, the information processing apparatus 1 may instruct the external computer to calculate the predicted value 490 by supplying the destination 49 to the external computer. The information processing apparatus 1 may acquire the predicted value 490 from the external computer as a calculation result in response to the instruction.

After acquiring the predicted value 490, the information processing apparatus 1 may calculate the current remaining energy value 300 by subtracting the predicted value 490 from the current value 30 of the remaining energy level. In addition, the information processing apparatus 1 may determine the attribute value 35 of the vehicle position mark 5 according to the calculated current remaining energy value 300. In other words, determining the attribute value 35 of the vehicle position mark 5 according to the current value 30 of the remaining energy level may be constituted of determining the attribute value 35 of the vehicle position mark 5 according to the current remaining energy value 300 that is calculated by subtracting the acquired predicted value 490 from the current value 30 of the remaining energy level.

According to one example of the present embodiment, by determining the attribute value 35 according to the remaining energy value 300, an ergonomic reduction in a burden of checking the remaining energy level that is predicted upon arrival at the destination 49 together with the map 45 can be expected. Note that in one example, the information processing apparatus 1 may determine at least any of a value of the color 351, a value of the size 353, the identifier 355 of an icon, and a value of the lighting pattern 357 according to the calculated current remaining energy value 300.

### [Vehicle]

A type of the vehicle MV need not be particularly limited and may be selected as appropriate in accordance with the embodiment. The vehicle MV may include a manually operated vehicle and an autonomous vehicle. The vehicle MV may be selected from, for example, a motorcycle, a three-wheeled vehicle, and a four-wheeled vehicle. A size of the vehicle MV may be selected arbitrarily. For example, when the vehicle MV is an automobile, a size of the vehicle MV may be selected from large, mid-size, semi-mid-size, standard, special large, special small, and the like. When the vehicle MV is a motorcycle, a size of the vehicle MV may be selected from large, standard, and the like.

In addition, an energy source S of the vehicle MV also need not be particularly limited and may be selected as appropriate in accordance with the embodiment. For example, the energy source S may be selected from a battery (electricity), a fuel cell (fuel), an internal combustion engine (fuel), and the like. For example, fuel may include hydrogen, alcohol (ethanol, bioethanol, or the like), gasoline, and the like.

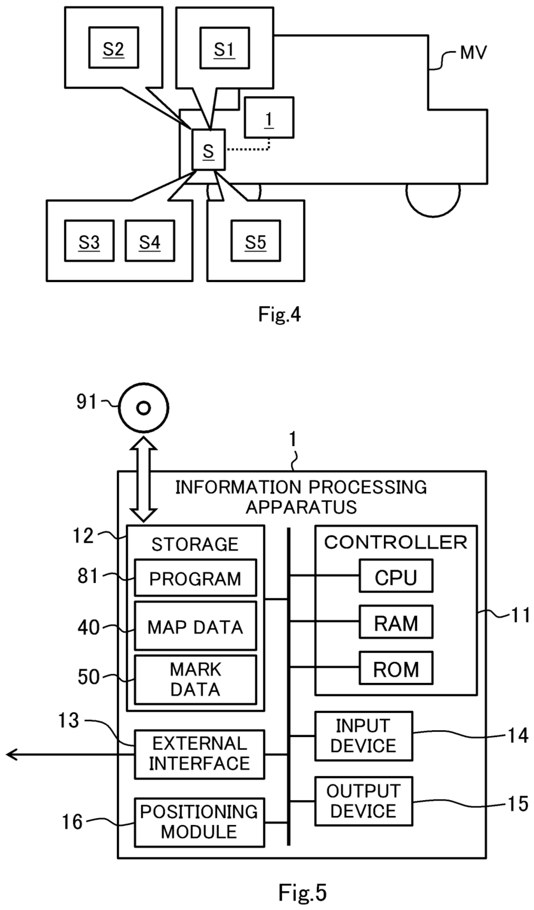

Fig. 4 schematically illustrates an example of the energy source S of the vehicle MV according to the present embodiment. In one example, the vehicle MV may be a battery electric vehicle. In this case, the energy source S may include a battery S1. A remaining energy level may be a remaining battery level. According to one example of the present embodiment, an ergonomic reduction in a burden of checking the remaining energy level together with the map 45 can be expected in a situation where a battery electric vehicle is used.

In addition, in one example, the vehicle MV may be a fuel cell vehicle. In this case, the energy source S may include a fuel cell S2. For example, fuel may include hydrogen, alcohol (ethanol, bioethanol, or the like), and the like. A remaining energy level may be a remaining fuel level. According to one example of the present embodiment, an ergonomic reduction in a burden of checking the remaining energy level together with the map 45 can be expected in a situation where a fuel cell vehicle is used.

In addition, in one example, the vehicle MV may be a hybrid vehicle. In this case, the energy source S may include a battery S3 and an internal combustion engine S4. For example, the fuel of the internal combustion engine S4 may include gasoline. A remaining energy level may be at least either a remaining battery level or a remaining fuel level. According to one example of the present embodiment, an ergonomic reduction in a burden of checking the remaining energy level together with the map 45 can be expected in a situation where a hybrid vehicle is used.

In addition, in one example, the vehicle MV may be an internal combustion engine vehicle. In this case, the energy source S may include an internal combustion engine S5. A remaining energy level may be a remaining fuel level. According to one example of the present embodiment, an ergonomic reduction in a burden of checking the remaining energy level together with the map 45 can be expected in a situation where an internal combustion engine vehicle is used.

Note that the information processing apparatus 1 may acquire remaining amount information indicating the current value 30 of the remaining energy level by any method from the vehicle MV. A known method may be adopted as the method of acquiring the current value 30 of the remaining energy level. For example, the remaining energy level may be measured by a sensor (a current sensor, a remaining amount indicator, a fuel gauge, or the like). A type of the sensor (a method of measuring the remaining energy level) may be selected as appropriate according to the type of the energy source S. In addition, for example, the remaining energy level may be calculated by a computer provided in the vehicle MV. The computer of the vehicle MV may include an electronic control unit (ECU) or the like. In one example, acquiring the current value 30 of the remaining energy level from the vehicle MV may include acquiring the current value 30 of the remaining energy level from at least either a sensor or the computer of the vehicle MV.

### [2 Configuration example]

### [Hardware configuration example]

Fig. 5 schematically illustrates an example of a hardware configuration of the information processing apparatus 1 according to the present embodiment. In one example, the information processing apparatus 1 according to the present embodiment may be configured as a computer to which a controller 11, a storage 12, an external interface 13, an input device 14, an output device 15, and the positioning module 16 are electrically connected.

The controller 11 may include a CPU that is a hardware processor, a random access memory (RAM), and a read only memory (ROM) and is configured to execute information processing based on a program and various kinds of data. The controller 11 (CPU) is an example of a processor resource.

For example, the storage 12 may include a hard disk drive, a solid state drive, a semiconductor memory, and the like and is configured to hold any data. The storage 12, the RAM, and the ROM are examples of a memory resource of the information processing apparatus 1. In one example, the storage 12 may store various kinds of information such as a program 81, the map data 40, and mark data 50.

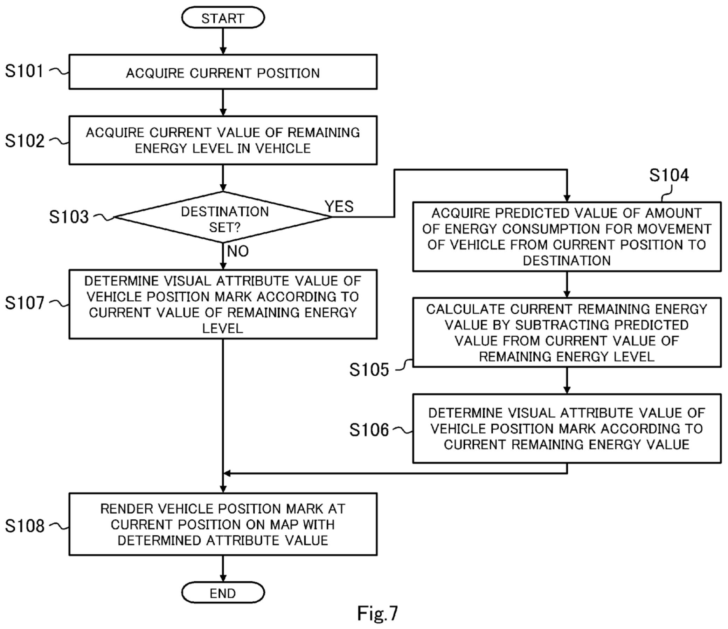

The program 81 is a program for causing the information processing apparatus 1 to execute information processing (Fig. 7 to be described later) related to the rendering of the vehicle position mark 5. The program 81 includes a series of instructions of the information processing. The program 81 is an example of the program according to the present disclosure. The map data 40 may be omitted from the storage 12. The mark data 50 is configured to indicate the vehicle position mark 5. The mark data 50 may be configured as appropriate to be capable of changing the attribute value 35 of the vehicle position mark 5. In one example, the mark data 50 may be configured to be capable of selecting a value of the color 351, a value of the size 353, the identifier 355 of an icon, and a value of the lighting pattern 357 within a range used. The mark data 50 may include an image of an icon and the like.

In one example, at least one of the program 81, the map data 40, and the mark data 50 may be stored in a storage medium 91 instead of the storage 12 or together with the storage 12. The storage medium 91 is configured to accumulate various kinds of information (stored programs and the like) by an electrical action, a magnetic action, an optical action, a mechanical action, or a chemical action so that the information is readable by a machine such as a computer. The storage 12 and the storage medium 91 are examples of a non-transitory storage medium. The information processing apparatus 1 may acquire at least one of the program 81, the map data 40, and the mark data 50 from the storage medium 91. The storage medium 91 may be a disk-type storage medium (CD, DVD, or the like) or a non-disk type storage medium that is a semiconductor memory (flash memory or the like). Any drive apparatus may be used to read information stored in the storage medium 91. A type of the drive apparatus may be selected according to the storage medium 91. The drive apparatus may be connected to the information processing apparatus 1 by any method (for example, via the external interface 13). The storage medium 91 may include an external main memory.

The external interface 13 is configured to connect to an external apparatus in a wired or wireless manner. For example, the external interface 13 may be a Universal Serial Bus (USB) port, a communication port (communication module), or a dedicated port. A type and the number of the external interface 13 may be selected as appropriate in accordance with the embodiment. A communication standard of the communication port (communication module) may be arbitrarily selected. For example, the communication standard may be selected as appropriate from the Internet, a wireless communication network, a mobile communication network, a telephone network, and a dedicated network. The dedicated network may include an in-vehicle network (controller area network). In one example, the information processing apparatus 1 may be connected to the vehicle MV via the external interface 13.

The input device 14 is configured to accept input of information. The input device 14 may be constituted of, for example, a touch panel or an operator. The output device 15 is configured to output information. The output device 15 may be constituted of, for example, a display or a speaker. The user can operate the information processing apparatus 1 by using the input device 14 and the output device 15. The input device 14 and the output device 15 need not be directly connected to the information processing apparatus 1 and may be indirectly connected via the external interface 13. The input device 14 and the output device 15 may be integrally configured at least in part by a touch panel display or the like.

The positioning module 16 is configured to measure a position. A type of the positioning module 16 need not be particularly limited as long as the positioning module 16 is capable of measuring positions and may be selected as appropriate in accordance with the embodiment. For example, the positioning module 16 may be constituted of a global positioning system (GPS) sensor, a global navigation satellite system (GNSS) sensor, or the like. In addition, for example, the positioning module 16 may be configured to estimate a distance to each base station (wireless access point) according to an intensity of a signal received from each base station. The positioning module 16 may be configured to measure a position by any method (such as trilateration) based on an estimated distance to each base station. In this case, the positioning module 16 may be at least partially common with the external interface 13 (communication module). In one example, the positioning module 16 may be constituted of the controller 11 (CPU) and a communication module. A type of the base stations may be selected as appropriate in accordance with the embodiment. In addition, the positioning module 16 need not be built into the information processing apparatus 1 and may be connected to the information processing apparatus 1 via the external interface 13.

With respect to a specific hardware configuration of the information processing apparatus 1, components can be omitted, replaced, or added as appropriate in accordance with the embodiment. For example, the controller 11 may include a plurality of hardware processors. The hardware processors may be constituted of a microprocessor, a field-programmable gate array (FPGA), a digital signal processor (DSP), an ECU, a graphics processing unit (GPU), an application specific integrated circuit (ASIC), and the like. At least one of the input device 14 and the output device 15 may be omitted. At least one of the program 81, the map data 40, and the mark data 50 may be saved in an external main memory such as a network attached storage (NAS). The external main memory is also an example of a non-transitory storage medium. The information processing apparatus 1 may be constituted of a plurality of computers. In this case, hardware configurations of the respective computers may or may not match each other. The information processing apparatus 1 may be a computer designed specifically for a service to be provided, as well as a general-purpose personal computer (PC), a notebook PC, an in-vehicle device, a terminal apparatus, or the like. The terminal apparatus may include a user terminal such as a smartphone or a tablet terminal.

### [Software configuration]

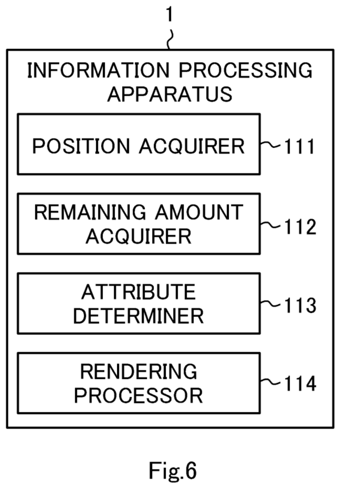

Fig. 6 schematically illustrates an example of a software configuration of the information processing apparatus 1 according to the present embodiment. The controller 11 of the information processing apparatus 1 executes instructions included in the program 81 stored in the storage 12 with the CPU. Accordingly, the information processing apparatus 1 operates as a computer including a position acquirer 111, a remaining amount acquirer 112, an attribute determiner 113, and a rendering processor 114 as software modules. In other words, in the present embodiment, each software module of the information processing apparatus 1 is realized by the controller 11 (CPU).

The position acquirer 111 is configured to acquire the current position 25 of the vehicle MV. The remaining amount acquirer 112 is configured to acquire the current value 30 of the remaining energy level in the vehicle MV. The attribute determiner 113 is configured to determine the visual attribute value 35 of the vehicle position mark 5 according to the acquired current value 30 of the remaining energy level. The rendering processor 114 is configured to render the vehicle position mark 5 at the acquired current position 25 on the map 45 with the determined attribute value 35.

In one example, the attribute determiner 113 may be further configured, when the destination 49 is set on the map 45, to acquire the predicted value 490 of an amount of energy consumption for a movement of the vehicle MV from the current position 25 to the destination 49. Accordingly, determining the attribute value 35 of the vehicle position mark 5 according to the current value 30 of the remaining energy level may be constituted of determining the attribute value 35 of the vehicle position mark 5 according to the current remaining energy value 300 that is calculated by subtracting the acquired predicted value 490 from the current value 30 of the remaining energy level.

Note that in the present embodiment, an example where each software module of the information processing apparatus 1 is realized by a general-purpose CPU is described. However, a part of or all of the software modules described above may be realized by one or a plurality of dedicated processors or chip sets. Each of the modules described above may be realized as a hardware module. With respect to the software configuration of the information processing apparatus 1, modules may be omitted, replaced, or added as appropriate in accordance with the embodiment.

### [3 Operation example]

Fig. 7 is a flow chart illustrating an example of a processing procedure related to rendering of the vehicle position mark 5 by the information processing apparatus 1 according to the present embodiment. The processing procedure described below is an example of an information processing method to be executed by a computer. However, the processing procedure described below is merely an example and each step may be modified as much as possible. In addition, with respect to the processing procedure described below, steps can be omitted, replaced, or added as appropriate in accordance with the embodiment.

### (Step S101)

In step S101, the controller 11 operates as the position acquirer 111 and acquires the current position 25 of the vehicle MV. In one example, the controller 11 may acquire the current position 25 from the positioning module 16. Once the current position 25 is acquired, the controller 11 advances processing to a next step S102.

### (Step S102)

In step S102, the controller 11 operates as the remaining amount acquirer 112 and acquires the current value 30 of the remaining energy level in the vehicle MV. In one example, the vehicle MV may be a battery electric vehicle and the remaining energy level may be a remaining battery level. In one example, the vehicle MV may be a fuel cell vehicle and the remaining energy level may be a remaining fuel level. In one example, the vehicle MV may be a hybrid vehicle and the remaining energy level may be at least either a remaining battery level or a remaining fuel level. In addition, in one example, the vehicle MV may be an internal combustion engine vehicle and the remaining energy level may be a remaining fuel level. The controller 11 may acquire the current value 30 of the remaining energy level from the vehicle MV as appropriate. Once the current value 30 of the remaining energy level is acquired, the controller 11 may advance processing to a next step S103.

### (Step S103)

In step S103, the controller 11 determines a branch destination of processing according to whether or not the destination 49 is set. Setting of the destination 49 may be acquired as appropriate. When the information processing apparatus 1 is configured to execute route guidance, the controller 11 may determine whether or not the destination 49 is set by referring to information on the route guidance held in a memory resource. When another computer (navigation apparatus) other than the information processing apparatus 1 is configured to execute route guidance, the controller 11 may determine whether or not the destination 49 is set by making a query to the other computer. When the destination 49 is set, the controller 11 advances the processing to a next step S104. On the other hand, when the destination 49 is not set, the controller 11 advances the processing to step S107.

### (Step S104 to step S106)

In step S104, the controller 11 operates as the attribute determiner 113 and acquires the predicted value 490 of the amount of energy consumption for a movement of the vehicle MV from the current position 25 to the destination 49. In step S105, the controller 11 calculates the current remaining energy value 300 by subtracting the predicted value 490 from the current value 30 of the remaining energy level. In step S106, the controller 11 determines the attribute value 35 of the vehicle position mark 5 according to the calculated current remaining energy value 300. In one example, the controller 11 may determine at least any of a value of the color 351, a value of the size 353, the identifier 355 of an icon, and a value of the lighting pattern 357 according to the calculated current remaining energy value 300. Once the attribute value 35 is determined, the controller 11 advances the processing to a next step S108.

### (Step S107)

In step S107, the controller 11 operates as the attribute determiner 113 and determines the visual attribute value 35 of the vehicle position mark 5 according to the acquired current value 30 of the remaining energy level. In one example, the controller 11 may directly determine the attribute value 35 from the current value 30. In addition, in one example, the controller 11 may determine at least any of a value of the color 351, a value of the size 353, the identifier 355 of an icon, and a value of the lighting pattern 357 according to the acquired current value 30 of the remaining energy level. Once the attribute value 35 is determined, the controller 11 advances the processing to a next step S108.

### (Step S108)

In step S108, the controller 11 operates as the rendering processor 114 and renders the vehicle position mark 5 at the acquired current position 25 on the map 45 with the determined attribute value 35. A rendering destination of the map 45 and the vehicle position mark 5 need not be particularly limited and may be selected as appropriate in accordance with the embodiment. In one example, the controller 11 may render the map 45 and the vehicle position mark 5 on at least either the output device 15 and an external output apparatus connected to the information processing apparatus 1. The external output apparatus may include an output apparatus of an external computer.

Once the controller 11 renders the map 45 and the vehicle position mark 5, the controller 11 ends the processing procedure according to the present operation example. Note that the controller 11 may execute the series of processing of step S101 to step S108 in real-time. In addition, the controller 11 may repeatedly execute the series of processing of step S101 to step S108 at any timing. Accordingly, the controller 11 may continuously render the map 45 and the vehicle position mark 5.

### [Features]

In the present embodiment, the attribute value 35 of the vehicle position mark 5 is determined according to the current value 30 of the remaining energy level by the processing of step S106 and step S107. Therefore, the remaining energy level can be conveyed by the display of the vehicle position mark 5 on the map 45 that is rendered in the processing of step S108. In other words, the remaining energy level can be checked while looking at the map 45. Accordingly, since the map 45 and the remaining energy level of the vehicle MV can be checked by looking at a same position (a position where the vehicle position mark 5 is displayed), a burden of looking at separate positions can be reduced. Therefore, according to the present embodiment, an ergonomic reduction in a burden of checking the remaining energy level together with the map 45 can be expected.

### [4 Modifications]

While the embodiment of the present disclosure has been described using specific terms, the forgoing description is in all respects merely illustrative of the disclosure. The processing steps and means described in the present disclosure may be freely combined and implemented insofar as no technical contradictions arise. Various improvements or modifications may be made as appropriate in the embodiment described above.

In addition, with respect to the processing procedure of the information processing apparatus 1 according to the embodiment described above, at least any of omission, replacement, and addition of steps may be performed. For example, the processing of step S103 to step S106 may be omitted. The timing of executing the processing of step S102 need not be limited to the example in Fig. 7 and may be modified as appropriate in accordance with the embodiment. The processing of step S102 may be executed before the processing of step S101. The timing of executing the processing of step S101 need not be limited to the example in Fig. 7 and may be modified as appropriate in accordance with the embodiment. When not omitting the processing of step S103 to step S106, the processing of step S101 may be executed at any timing before executing the processing of step S104. When omitting the processing of step S103 to step S106, the processing of step S101 may be executed at any timing before executing the processing of step S108.

### [5 Supplement]

The processing steps and means described in the present disclosure may be freely combined and implemented insofar as no technical contradictions arise.

In addition, processing described as being performed by one apparatus may be shared and executed by a plurality of apparatuses. Alternatively, processing described as being performed by different apparatuses may be executed by one apparatus. In a computer system, what kind of hardware configuration is used to realize each function can be changed in a flexible manner.

The present disclosure can also be realized by supplying a computer program implementing the functions described in the above embodiment to a computer and having one or more processors of the computer read and execute the program. Such a computer program may be provided to the computer by a non-transitory computer-readable storage medium that can be connected to a system bus of the computer or may be provided to the computer over a network. The non-transitory computer-readable storage medium may include, for example, any type of disk, a read-only memory (ROM), a random access memory (RAM), an EPROM, an EEPROM, a magnetic card, a flash memory, an optical card, a semiconductor drive, and any type of media suitable for storing electronic instructions. The disk may include, for example, a magnetic disk and an optical disk. The magnetic disk may include, for example, a hard disk drive (HDD). The optical disk may include, for example, a CD-ROM, a DVD disk, and a Blu-ray Disc. The semiconductor drive may include, for example, a solid state drive.

## Claims

1. An information processing apparatus (1), comprising a controller (11) configured to execute:
acquiring a current position (25) of a vehicle (MV);
acquiring a current value (30) of a remaining energy level in the vehicle (MV);
determining a visual attribute value (35) of a vehicle position mark (5) according to the acquired current value (30) of the remaining energy level; and
rendering the vehicle position mark (5) at the acquired current position (25) on a map with the determined attribute value (35).

2. The information processing apparatus (1) according to claim 1, wherein
the visual attribute value (35) of the vehicle position mark (5) includes a value of a color (351) of the vehicle position mark (5).

3. The information processing apparatus (1) according to claim 1, wherein
the visual attribute value (35) of the vehicle position mark (5) includes a value of a size (353) of the vehicle position mark (5).

4. The information processing apparatus (1) according to claim 1, wherein
the visual attribute value (35) of the vehicle position mark (5) includes an identifier (355) of an icon used in the vehicle position mark (5).

5. The information processing apparatus (1) according to claim 1, wherein
the visual attribute value (35) of the vehicle position mark (5) includes a value of a lighting pattern (357) of the vehicle position mark (5).

6. The information processing apparatus (1) according to claim 1, wherein
the controller (11) is configured to further execute, when a destination (49) is set on the map, acquiring a predicted value (490) of an amount of energy consumption for a movement of the vehicle (MV) from the current position (25) to the destination (49), and
determining the attribute value (35) of the vehicle position mark (5) according to the current value (30) of the remaining energy level is constituted of determining the attribute value (35) of the vehicle position mark (5) according to a current remaining energy value (300) that is calculated by subtracting the acquired predicted value (490) from the current value (30) of the remaining energy level.

7. The information processing apparatus (1) according to claim 1, wherein
the vehicle (MV) is a battery electric vehicle, and
the remaining energy level is a remaining battery level.

8. The information processing apparatus (1) according to claim 1, wherein
the vehicle (MV) is a fuel cell vehicle, and
the remaining energy level is a remaining fuel level.

9. The information processing apparatus (1) according to claim 1, wherein
the vehicle (MV) is a hybrid vehicle, and
the remaining energy level is at least either a remaining battery level or a remaining fuel level.

10. A program for causing a computer (1) to execute an information processing method, wherein
the information processing method includes:
acquiring a current position (25) of a vehicle (MV);
acquiring a current value (30) of a remaining energy level in the vehicle (MV);
determining a visual attribute value (35) of a vehicle position mark (5) according to the acquired current value (30) of the remaining energy level; and
rendering the vehicle position mark (5) at the acquired current position (25) on a map with the determined attribute value (35).

11. The program according to claim 10, wherein
the visual attribute value (35) of the vehicle position mark (5) includes a value of a color (351) of the vehicle position mark (5).

12. The program according to claim 10, wherein
the visual attribute value (35) of the vehicle position mark (5) includes a value of a size (353) of the vehicle position mark (5).

13. The program according to claim 10, wherein
the visual attribute value (35) of the vehicle position mark (5) includes an identifier (355) of an icon used in the vehicle position mark (5).

14. The program according to claim 10, wherein
the visual attribute value (35) of the vehicle position mark (5) includes a value of a lighting pattern (357) of the vehicle position mark (5).

15. The program according to claim 10, wherein
the information processing method further includes, when a destination (49) is set on the map, acquiring a predicted value (490) of an amount of energy consumption for a movement of the vehicle (MV) from the current position (25) to the destination (49), and
determining the attribute value (35) of the vehicle position mark (5) according to the current value (30) of the remaining energy level is constituted of determining the attribute value (35) of the vehicle position mark (5) according to a current remaining energy value (300) that is calculated by subtracting the acquired predicted value (490) from the current value (30) of the remaining energy level.
